# EUROPÄISCHE PATENTSCHRIFT

(11) **EP 2 389 061 B1**
(45) Veröffentlichungstag und Bekanntmachung des Hinweises auf die Patenterteilung: **16.01.2013**
(21) Anmeldenummer: 10706904.9
(22) Anmeldetag: 20.01.2010
(51) Int. Cl.: A01D 41/127

(54) **VORRICHTUNG UND VERFAHREN ZUR MASSEBEZOGENEN BESTIMMUNG DES ERTRAGES VON GETREIDEKÖRNERN AN ERNTEMASCHINEN**
DEVICE AND METHOD FOR DETERMINING THE MASS-RELATED YIELD OF GRAINS IN HARVESTING MACHINES
DISPOSITIF ET PROCÉDÉ DE DÉTERMINATION, EN FONCTION DE LA MASSE, DU RENDEMENT DE GRAINS DE CÉRÉALES SUR DES MOISSONNEUSES

(30) Priorität: 20.01.2009 DE 102009005873
(43) Veröffentlichungstag der Anmeldung: 30.11.2011
(73) Patentinhaber: Hochschule für Technik und Wirtschaft Dresden, 01069 Dresden (DE)
(72) Erfinder: WILD, Karl, 01454 Ullersdorf (DE)
(74) Vertreter: Pfenning, Meinig & Partner GbR
(86) Internationale Anmeldenummer: PCT/DE2010/000099
(87) Internationale Veröffentlichungsnummer: WO 2010/083823

(56) Entgegenhaltungen:
- EP-A1- 1 769 667
- US-A1- 2002 133 309

## Beschreibung

Die Erfindung betrifft eine Vorrichtung und ein Verfahren zur massebezogenen Bestimmung des Ertrages von Getreidekörnern an Erntemaschinen.

Sie ist zur mobilen Ertragserfassung für geerntete Getreidekörner in einem Mähdrescher geeignet, wobei unter Getreide auch Raps und andere Körnerfrüchte sowie Häckselgut verstanden werden sollen. Dabei können mit der Erfindung sowohl das geerntete Getreidekörnervolumen, wie auch die Gesamtmasse der geernteten Getreidekörner bestimmt werden.

Der Begriff "Precision Farming" hat sich in der Agrartechnik seit einigen Jahren durchgesetzt, da geeignete Ertragsmesssysteme an den unterschiedlichsten Erntemaschinen und auch an Mähdreschern bereits eingesetzt werden.

Insbesondere bei der Ertragsbestimmung von geernteten Getreidekörnern wird bisher das jeweilige Volumen bestimmt. Hierfür wird beispielsweise über die erfasste Drehzahl eines Zellenrades mit bekannter Zellengröße oder über die Bestimmung der Höhe von Getreidekörnerhäufchen auf Elevatorpaddeln, die die Getreidekörner zum Korntank fördern, die Bestimmung durchgeführt. Da aber die jeweilige Dichte der Getreidekörner, deren Feuchtigkeitsgehalt, die Form der einzelnen Getreidekörner sowie eine mögliche Neigung eines Mähdreschers während der Erntearbeiten sich ständig ändernde Parameter darstellen, sind die so ermittelten Ertragskennwerte stark fehlerbehaftet. Um diesen Fehlern entgegenzuwirken, werden häufig Kalibrierungen durchgeführt, die einen erheblichen Zeitaufwand erfordern und zu Ausfallzeiten führen. Insbesondere wegen der sich häufig und stark verändernden Parameter Feuchtigkeitsgehalt und Dichte der geernteten Getreidekörner ist es eigentlich erforderlich, die Kalibrierung ständig durchzuführen, was aber nicht praktikabel ist. Mit den bekannten Kalibriermöglichkeiten lassen sich auch nicht sämtliche Einflussgrößen eliminieren bzw. berücksichtigen. Eine Ausführungsform, bei der eine Volumenbestimmung mit einem Zellenrad erfolgen soll, ist aus US 6,584,424 B2 bekannt. Dabei sind aber die Elemente zur Bestimmung der Masse und des Volumens von geerntetem Getreide voneinander getrennt. Für eine Kalibrierung eines Messbehälters zur Massebestimmung erfolgt mit einem gesonderten Vergleichsbehälter oder einer Kalibriermasse, so dass ggf. auftretende Veränderungen der Eigenmasse des eigentlichen Messbehälters zu Fehlern führen können. Auftretende Störgrößen wirken dabei nicht gleich auf den Mess- und den Vergleichbehälter oder Kalibriermasse, so dass dadurch Messfehler auftreten können, die nicht kompensiert werden können.

Wie schon erwähnt, soll dass Volumen mit einem Zellenrad bestimmt werden. Dabei ist die Rotationsachse horizontal ausgerichtet und die einzelnen Zellenwände der Zellen rotieren um diese Achse. Hierbei ist es aber auch bei anderen Anwendungen bekannt, dass es zu Verklemmungen kommt, die zu Ausfällen führen und Wartungsarbeiten erforderlich machen. Es treten auch prinzipbedingt Messfehler auf, da jede einzelne Zelle nicht immer vollständig befüllbar ist. Bei ölhaltigen Körnerfrüchten, wie z.B. Raps, kann ÖI und bei anderen Körnerfrüchten Feuchtigkeit am Zellenrad austreten, was ebenfalls Wartung bzw. eine Reinigung erforderlich macht. Es besteht auch die Gefahr, dass sich Erde ablagert, was durch ÖI oder Feuchtigkeit noch unterstützt auftreten kann. Werden diese Ablagerungen nicht erkannt und beseitigt, treten Messfehler auf.

Eine andere Art und Weise der Ertragsbestimmung beruht dabei auf der Messung von Kräften. Hierbei werden die Kräfte an einer Prallplatte erfasst, die auftreten, wenn Getreidekörner gegen diese Prallplatte geschleudert werden. Untersuchungen hierzu haben aber ergeben, dass auch diese Vorgehensweise stark vom jeweiligen Erntegut, also den unterschiedlichst geernteten Getreidekörnern und anderen Umgebungsparametern, wie z.B. Temperatur und Luftdruck, stark beeinflusst werden. Die erhaltenen Messergebnisse sind daher ebenfalls erheblich fehlerbehaftet und können keine ausreichend eindeutigen Aussagen über den tatsächlich erwirtschafteten Ernteertrag liefern.

Dabei sollte auch beachtet werden, dass es von den Landwirten gewünscht ist, den jeweils geernteten Ertrag auf die jeweilige Ackerfläche beziehen zu können, um beispielsweise durch nachfolgend durchzuführende lokal gezielte Düngung den Ertrag bei nachfolgenden Ernten positiv beeinflussen zu können und Überdüngungen zu vermeiden.

Aus der nicht vorveröffentlichten Patentanmeldung DE 10 2008 015 471 ist ein System und ein Verfahren zur mobilen Ertragserfassung für geerntete Getreidekörner in einem Mähdrescher bekannt. Dabei werden eine Einrichtung zur Bestimmung des Volumens geernteter Getreidekörner und eine Einrichtung zur Bestimmung der Masse geernteter Getreidekörner an einem Mähdrescher eingesetzt. Es erfolgt eine Bestimmung des gesamten Volumens an geernteten Getreidekörnern, wohingegen lediglich die Masse eines relativ geringen Teils der geernteten Getreidekörner bestimmt wird. Um dies zu erreichen, wird eine zyklische Volumenbestimmung der geernteten Getreidekörner mit bekannten Teilvolumina durchgeführt. Aus diesen jeweiligen Teilvolumina werden dann ebenfalls jedoch häufig in größeren Abständen Teilvolumen abgezweigt und dann eine Massebestimmung an den abgezweigten Teilvolumen durchgeführt.

Für die zyklische Bestimmung des Volumens geernteter Getreidekörner mit zyklisch erhaltenen Teilvolumina ist an der Einrichtung zur Bestimmung des Volumens ein Drehantrieb für mindestens zwei vertikal oben offene und voneinander getrennte Behältnisse vorhanden. Die jeweiligen Innenvolumen der Behältnisse sind dabei bekannt. Für die Bestimmung des gesamten Volumens an geernteten Getreidekörnern ist daher ein hoher Aufwand erforderlich. Durch die sich drehenden voneinander getrennten Behältnisse über die das gesamte Erntevolumen geführt werden muss, besteht ebenfalls die Gefahr von Verklemmungen in Folge von eingeklemmten bzw. angeklebten Getreidekörnern oder Schmutz. Auch der Verschleiß an mechanischen Teilen kann Probleme hervorrufen.

Es ist daher Aufgabe der Erfindung, die erreichbare Genauigkeit bei der Bestimmung von Ertragen geernteter Getreidekörner zu erhöhen, dabei gleichzeitig den hierfür erforderlichen Aufwand zu reduzieren und die Betriebssicherheit über längere Zeiträume zu erhöhen.

Erfindungsgemäß wird diese Aufgabe mit einem System, das die Merkmale des Anspruchs 1 aufweist, gelöst. Es kann mit einem Verfahren gemäß Anspruch 7 gearbeitet werden. Vorteilhafte Ausgestaltungsformen und Weiterbildungen der Erfindung können mit in untergeordneten Ansprüchen bezeichneten Merkmalen erreicht werden.

Bei der erfindungsgemäßen Vorrichtung ist mindestens ein an seiner vertikal oberen Seite offenes Behältnis mit bekanntem Innenvolumen in einen vertikal herabfallenden Erntegutstrom sequentiell ein- und wieder heraus bewegbar. Das Behältnis ist mit einer Einrichtung zur Bestimmung der Masse versehen oder mit einer solchen Einrichtung verbindbar bzw. verbunden. Bei der Bewegung des Behältnisses wird ein Abstreifer passiert, dessen vertikal untere Stirnfläche in Höhe der vertikal oberen Stirnfläche des Behältnisses angeordnet ist, so dass eine jeweils konstante Befüllung bei einer Bestimmung der Masse des Teilvolumens bei einer Messung erreicht werden kann.

Außerdem ist eine Einrichtung zur Bestimmung des gesamten Volumens an geernteten Getreidekörnern vorhanden. Dabei wird das gesamte Erntegut über einen Aufsatzkasten, der einen Pufferbehälter bilden kann, auf ein Förderband gegeben und dabei mittels mindestens eines Füllstandssenors und einer Abstreifeinrichtung eine konstante Beschickungshöhe über die gesamte zumindest die hierfür genutzte Breite auf dem Förderband eingehalten. Es ist eine füllstandsabhängige Steuerung für den Antrieb des Förderbandes vorhanden, so dass das Volumen durch Bestimmung des vom Förderband zurück gelegten Weges erfolgen kann. Vorteilhaft können mehrere solche Füllstandssensoren in verschiedenen Achsen bzw. Ebenen angeordnet vorgesehen sein.

Die Einrichtungen zur Bestimmung der Masse und zur Bestimmung des gesamten Volumens an geernteten Getreidekörnern sind an eine elektronische Auswerte- und Steuereinheit angeschlossen.

Das gesamte mit dem Förderband transportierte Erntegut kann direkt bzw. über eine Leitung zum Körnertank gelangen. Es fällt dabei im freien Fall an der in Förderrichtung hinteren Stirnseite des Förderbandes herab. In den dort oder ggf. auch an einer Seite des Transportbandes herab fallenden Erntegutstrom kann das Behältnis für die Bestimmung der Masse von Teilvolumen des Ernteguts hinein und dann gefüllt wieder heraus bewegt werden. Wie bereits angesprochen, wird mit dem Abstreifer eine konstante Befüllung erreicht.

Das aus dem Erntegut heraus bewegte und mit dem jeweiligen Teilvolumen gefüllte Behältnis kann dann mit einer Einrichtung zur Bestimmung der Masse gewogen werden. Aus der bestimmten Masse der Teilvolumen an Erntegut und dem bestimmten Gesamtvolumen an Erntegut kann die Gesamtmasse an geerntetem Erntegut berechnet werden. Dabei kann für bestimmte vorgegebene Ackerflächen bzw. Ackerflächenbereiche eine solche massebezogene Bestimmung des Ertrages durchgeführt werden, um beispielsweise den Düngereinsatz für nachfolgende Vegetationsperioden unter Berücksichtigung des flächen- und massebezogen ermittelten Ertrages lokal zu differenzieren. Dies kann in an sich bekannter Form mit Hilfe eines Navigationssystems, wie z.B. GPS oder DGPS erreicht werden.

Die Entnahme von Teilvolumen zur Bestimmung der Masse kann z.B. nach Ermittlung einer vorgegebenen Anzahl von Umdrehungen des Förderbandes bzw. seiner Antriebs- oder Umlenkrolle initiiert werden. Dies kann aber auch programmgesteuert erfolgen, wenn auf einer vorgegebenen Erntefläche die massebezogene Ertragsbestimmung mit höherer bzw. niedrigerer Flächenauflösung erfolgen soll.

Die ermittelten Massen von Teilvolumen können einfach und schnell mathematisch bei Kenntnis des Gesamtvolumens der geernteten Getreidekörner hochgerechnet werden. Der geerntete Ertrag kann dann in Dezitonnen oder Tonnen pro Fläche (Hektar) angegeben werden.

Vorteilhaft ist es dabei, dass für die Bestimmung der jeweiligen Masse eines Teilvolumens an Erntegut in einem Behältnis ein relativ großer Zeitraum zur Verfügung steht. Es können so mehrere Messungen an einem mit Teilvolumen befüllten Behältnis durchgeführt und beispielsweise mittels Mittelwertbildung eine genauere Massebestimmung erreicht werden. Auch können störungsbedingt auftretende Messfehler erkannt und dann verworfen werden. Hierfür können auch Störgrößen, die auch mit an der Erntemaschine vorhandenen Beschleunigungs- und/oder Neigungssensoren erfasst worden sind, berücksichtigt werden. Neben der erwähnten Mittelwertbildung kann aber auch eine Glättung oder Filterung (z.B. mittels Passfiltern) durchgeführt werden. Außerdem steht Zeit zwischen eigentlichen Messungen der Masse von Teilvolumen an geerntetem Erntegut zur Verfügung, in denen die Leermasse des Behältnisses zu Kalibrierzwecken in mehr oder weniger großen Zeitabständen bestimmt werden kann. Wird dabei eine Abweichung der Leermasse eines Behältnisses von einem Vorgabewert erkannt, kann eine Warnsignal generiert werden, so dass ein Fahrer oder Bedienpersonal eine Prüfung und ggf. eine Reinigung des Behältnisses bzw. der Einrichtung zur Bestimmung der Masse vornehmen kann.

Die erfindungsgemäße Vorrichtung kann bevorzugt am vertikal oberen Ende eines Elevators einer Erntemaschine angeordnet sein. Von diesem gelangt das gesamte Erntegutvolumen in einen Aufsetzkasten, der oberhalb des Förderbandes angeordnet ist. Mit mindestens einem Füllstandssensor (z.B. einem Ultraschallabstandssensor, einem optischen Detektor oder einer optischen Lichtschranke) kann dort der Füllstand bestimmt werden. Mit diesen Messsignalen kann der Antrieb des Förderbandes gesteuert werden, so dass in Abhängigkeit des jeweils momentan geernteten Volumens an Erntegut die Fördergeschwindigkeit gesteuert bzw. geregelt werden kann. So kann Erntegut mit dem Förderband schneller oder langsamer transportiert werden.

Mit Hilfe einer Abstreifeinrichtung am Eintritt des Erntegutes aus dem Aufsetzkasten zum Förderband kann in Verbindung mit der volumenbedingt beeinflussten Fördergeschwindigkeit gesichert werden, dass auf dem Förderband eine konstante Beschickungshöhe in der hierfür vorgesehenen Breite eingehalten wird. Mit diesen bekannten Werten kann in Abhängigkeit der Fördergeschwindigkeit auch der vom Förderband zurück gelegte Weg und dieser dann für die Bestimmung des Gesamtvolumens an geernteten Getreidekörnern genutzt werden. Hierfür kann die Drehzahl pro Zeit ermittelt und genutzt werden. An den Außenseiten des Förderbandes können Seitenwände vorhanden oder daran ausgebildet sein, die eine Förderbreite vorgeben über die eine konstante Beschickungshöhe eingehalten werden soll.

Zur Vermeidung von Schlupf kann das Band des Förderbandes mit Mitnehmern ausgestattet sein. Für einen gleichmäßigen Fluss kann es mit wechselnden Geschwindigkeiten betrieben werden. Sie kann in Abhängigkeit der Höhe des Ertrages bzw. des Volumenstroms an Erntegut eingestellt werden.

Die Genauigkeit der Bestimmung kann weiter erhöht werden, in dem die für den Antrieb des Förderbandes erforderliche Leistung bestimmt wird. Dies kann beispielsweise mit einer Drehmomentenmesswelle erreicht werden. Bei hydraulischem Antrieb kann die Druckdifferenz zwischen Zu- und Ableitung am Hydraulikmotor und bei einem Elektromotor die elektrische Leistung in bekannter Form durch Messung von elektrischem Strom und elektrischer Spannung bestimmt werden. Die Antriebsleistung ist dabei proportional zum Volumen aber auch der Masse des Ernteguts, das auf dem Förderband transportiert wird.

Die Bestimmung der Antriebsleistung im Leerlauf, also ohne Erntegut, kann zur Bestimmung von Fehlern am Förderband genutzt werden, da eine Erhöhung der für den Leerlauf erforderlichen Antriebsleistung beispielsweise darauf hinweisen kann, dass am Förderband Erntegut oder Schmutz anhaftet und dann ggf. entfernt werden muss.

Bei einer erfindungsgemäßen Vorrichtung können auch mehr als ein Behältnis eingesetzt werden, die dann alternierend in den Erntegutstrom hinein und wieder heraus bewegt und zur Bestimmung der Masse von Teilvolumen genutzt werden können.

Nachfolgend soll die Erfindung beispielhaft näher erläutert werden.

Dabei zeigen:
Figur 1 in schematischer Form ein Beispiel einer erfindungsgemäßen Vorrichtung, bei der ausschließlichen Volumenbestimmung des Ernteguts;
Figur 2 das Beispiel nach Figur 1 bei der Entnahme eines Teilvolumens aus dem Erntegutstrom und
Figur 3 das in den Figuren 1 und 2 gezeigte Beispiel nach der Entnahme mit gefülltem Behältnis für die Massebestimmung des Teilvolumens an Erntegut, das im Behältnis enthalten ist.

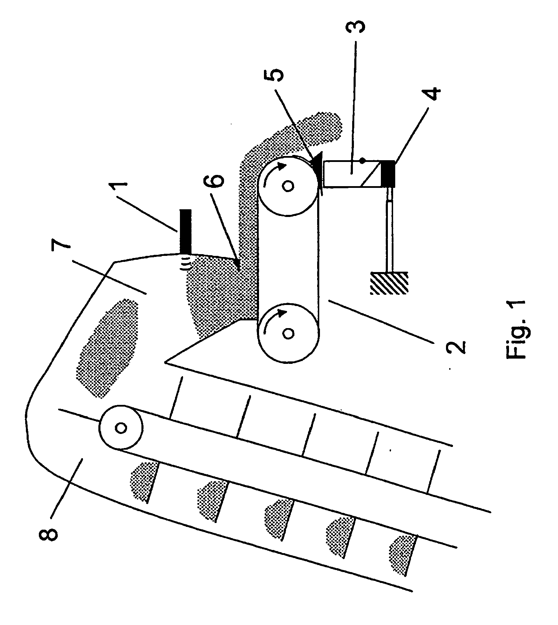

Figur 1 zeigt schematisch ein Beispiel einer erfindungsgemäßen Vorrichtung. Dabei wird das mit einem Mähwerk geerntete Erntegut mit einem Elevator 8 nach oben gefördert und gelangt von dort in einen Aufsetzkasten 7. Dieser dient als Pufferbehälter. Mit dem Füllstandssensor 1 wird das Volumen des im Aufsetzkasten 7 vorgehaltenen Ernteguts bestimmt. Das Messsignal des Füllstandssensors 1 wird zu einer elektronischen Auswerte- und Steuereinheit (nicht gezeigt) geführt und von dieser für die Steuerung der Geschwindigkeit des Förderbandes 2 genutzt. Dabei kann die Geschwindigkeit bei höherem Ertrag erhöht und bei niedrigerem Ertrag verringert werden.

Erntegut wird mit dem Förderband 2, das bevorzugt horizontal ausgerichtet ist, transportiert. Für die Einhaltung einer konstanten Beschickungshöhe an Erntegut auf dem Förderband 2 ist eine Abstreifeinrichtung 6 im in Förderrichtung vorderen Teil des Förderbandes 2 vorhanden. Am in Förderrichtung des Förderbandes 2 hinteren Ende kann das Erntegut im freien Fall auch direkt in einen Körnertank fallen.

Gleichzeitig wird die Drehzahl einer Rolle des Förderbandes 2 für die Bestimmung des zur Förderung zurück gelegten Weges oder dieser Weg direkt mit anderen Sensoren ermittelt und der elektronischen Auswerte- und Steuereinheit zugeführt. Da die Breite und Höhe des mit dem Förderband 2 transportierten Ernteguts bekannt sind, kann das Gesamtvolumen der geernteten Getreidekörner bestimmt werden.

Gemäß der Darstellung in Figur 1 ist ein Behältnis 3 mit bekanntem Innenvolumen hier geschützt unterhalb des Förderbandes 2 angeordnet und dabei inaktiv. In dieser Position und entleert kann dessen Eigenmasse zu Kalibrierzwecken bestimmt werden. Die so ermittelte Leer- bzw. Eigenmasse des Behältnisses 3 kann ebenfalls an die elektronische Auswerte- und Steuereinheit gegeben werden.

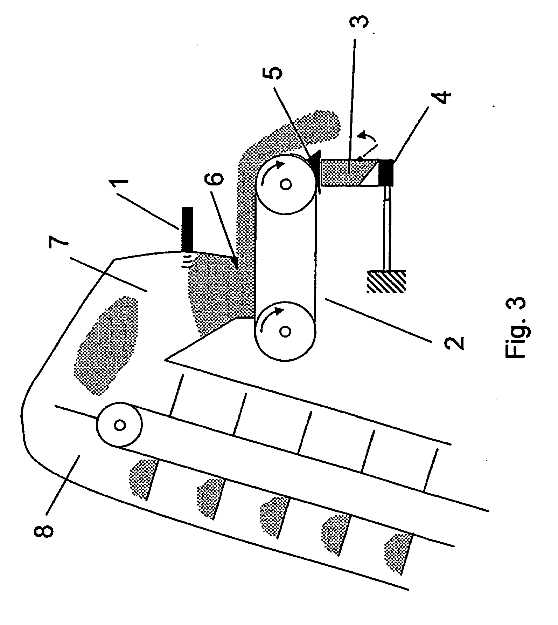

Nach Ablauf einer vorgegeben Zeit bzw. einem vom Förderband 2 zurück gelegten Weg für den Transport von Erntegut kann eine Bewegung des Behältnisses 3 mit einer hierfür geeigneten Mechanik durchgeführt werden. Dies kann eine translatorische oder auch eine Schwenkbewegung sein, um das vertikal oben offene Behältnis 3 in den vom Förderband 2 herab fallenden Erntegutstrom zu bewegen. Nach einer für eine Befüllung ausreichenden Zeit, wird das mit einem Teilvolumen befüllte Behältnis 3 zurück bewegt, wie in Figur 3 gezeigt. Bei der Bewegung wird es an einem Abstreifer 5 vorbei geführt, dessen vertikal untere Stirnfläche in etwa der Höhe des vertikal oberen Randes des Behältnisses 3 angeordnet ist, so dass überschüssige Getreidekörner entfernt und bei jeder Massebestimmung ein gleiches Volumen als Teilvolumen im Behältnis 3 enthalten ist.

Aus Figur 3 ist ersichtlich, dass die Gesamtmasse des gefüllten Behältnisses 3 mit einer Einrichtung 4 zur Bestimmung der Masse bestimmt werden kann. Da die Leermasse des Behältnisses 3 bekannt ist, kann so die Masse des im Behältnis 3 enthaltenen Teilvolumens des Ernteguts berechnet werden. Durch einfache mathematische Berechnung kann so der jeweilige Ertrag massebezogen bestimmt werden.

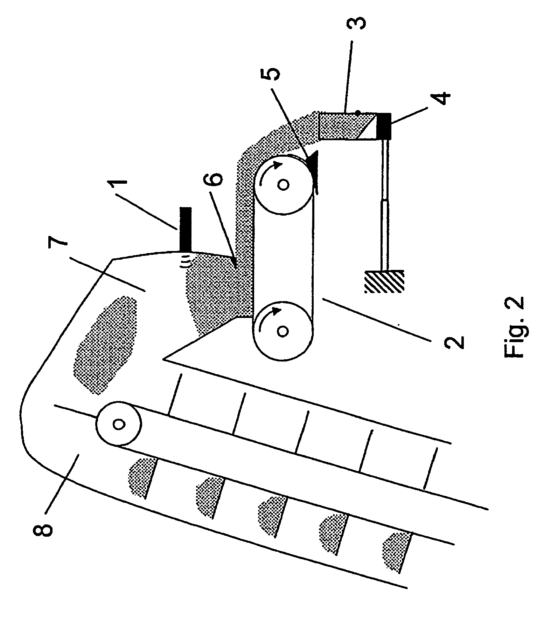

In den Figuren 1 bis 3 ist ebenfalls erkennbar, dass der untere Boden des Behältnisses 3 schräg geneigt ist. In diesem Bereich ist an der in Richtung des vom Förderband 2 herab fallenden Ernteguts weisenden Seite eine Klappe mit horizontal ausgerichteter Schwenkachse vorhanden. Wird dies Klappe verschwenkt, kann das Entegutteilvolumen aus dem Behältnis 3 entfernt werden, was vorteilhaft durch den schräg geneigten Boden des Behältnisses 3 unterstützt wird, so dass in einfacher Form eine vollständige Entleerung des Behältnisses 3 möglich ist.

In den Figuren 1 bis 3 ist weiterhin am in Förderrichtung des Förderbandes 2 hinteren Ende ein Abstreifer 5 angeordnet, der so ausgebildet ist, dass zusätzlich ein unerwünschter Eintritt von Erntegut in ein in geschützter Form entweder vollständig leeres oder ein mit einem Teilvolumen befülltes Behältnis 3 verhindert werden kann.

## Patentansprüche

1. Vorrichtung zur massebzogenen Bestimmung des Ertrages von Getreidekörnern an Erntemaschinen, bei der mindestens ein an seiner vertikal oberen Seite offenes Behältnis (3) mit bekanntem Innenvolumen in einen vertikal herab fallenden Erntegutstrom sequentiell ein- und wieder heraus bewegbar ist und das Behältnis (3) mit einer Einrichtung (4) zur Bestimmung der Masse versehen ist, wobei bei seiner Bewegung das Behältnis (3) einen Abstreifer (5) passiert, dessen vertikal untere Stirnfläche in Höhe der vertikal oberen Stirnfläche des Behältnisses (3) angeordnet ist und
außerdem eine Einrichtung zur Bestimmung des gesamten Volumens an geernteten Getreidekörnern vorhanden ist, wobei das gesamte Erntegut auf ein Förderband (2) gelangt und dabei mittels mindestens eines Füllstandssensors (1), einer Abstreifeinrichtung (6) eine konstante Beschickungshöhe auf dem Förderband (2) eingehalten ist und eine füllstandsabhängige Steuerung für den Antrieb des Förderbandes (2) erfolgt, so dass das Volumen durch Bestimmung des vom Förderband (2) zurück gelegten Weges bestimmbar ist und
die Einrichtung zur Bestimmung der Masse (4) und die Einrichtung zur Bestimmung des gesamten Volumens an geernteten Getreidekörnern an eine elektronische Auswerte- und Steuereinheit angeschlossen sind.

2. Vorrichtung nach Anspruch 1, **dadurch gekennzeichnet, dass** als Füllstandssensor (1) mindestens ein Ultraschallabstandssensor, eine optische Lichtschranke und/oder ein optischer Detektor vorhanden ist.

3. Vorrichtung nach Anspruch 1 oder 2, **dadurch gekennzeichnet, dass** eine Einrichtung zur Bestimmung der Antriebsleistung des Förderbandes (2) vorhanden ist.

4. Vorrichtung nach einem der vorhergehenden Ansprüche, **dadurch gekennzeichnet, dass** mindestens ein zusätzlicher Beschleunigungssensor und/oder ein Neigungssensor an der Erntemaschine vorhanden ist.

5. Vorrichtung nach einem der vorhergehenden Ansprüche, **dadurch gekennzeichnet, dass** das Behältnis (3) einen schräg geneigten Boden und eine um eine horizontal ausgerichtete Achse schwenkbare Klappe aufweist.

6. Vorrichtung nach einem der vorhergehenden Ansprüche, **dadurch gekennzeichnet, dass** das Behältnis (3) translatorisch bewegbar ist.

7. Verfahren zur massebezogenen Bestimmung des Ertrages von Getreidekörnern an Erntemaschinen, bei dem zur Bestimmung des gesamten Erntegutvolumens, das Erntegut in einen oberhalb eines Förderbandes (2) angeordneten Aufsatzkasten (7) eingeführt wird und das Erntegut mit dem Förderband (2) weiter transportiert wird, dabei auf dem Förderband (2) mit mindestens einem Füllstandssensor (1) und einer Abstreifeinrichtung (6) eine konstante Beschickungshöhe eingehalten und
die Fördergeschwindigkeit in Abhängigkeit des Füllstandes an Erntegut im Aufsetzkasten gesteuert wird, so dass mit dem vom Förderband zurück gelegten Weg das Gesamtvolumen des Ernteguts bestimmt wird; dabei
zusätzlich mindestens ein an seiner vertikal oberen Seite offenes Behältnis (3) mit bekanntem Innenvolumen in einen vertikal herabfallenden Erntegutstrom sequentiell ein- und wieder heraus bewegt wird, dabei
das aus dem Erntegut heraus bewegte Behältnis (3) mit einer Einrichtung (4) zur Bestimmung der Masse eines bekannten Teilvolumens gewogen wird und eine konstante Befüllung des Behältnisses (3) mit einem Abstreifer (5), dessen vertikal untere Stirnfläche in Höhe der vertikal oberen Stirnfläche des Behältnisses (3) angeordnet ist, eingehalten wird sowie
aus der bestimmten Masse von Teilvolumen an Erntegut und dem bestimmten Gesamtvolumen an Erntegut die Gesamtmasse an geerntetem Erntegut berechnet wird.

8. Verfahren nach Anspruch 7, **dadurch gekennzeichnet, dass** der vom Förderband (2) zurückgelegte Weg durch Bestimmung der Drehzahl ermittelt und daraus das gesamte Volumen des Ernteguts bestimmt wird.

9. Verfahren nach Anspruch 7 oder 8, **dadurch gekennzeichnet, dass** die Antriebsleistung für das Förderbandes (2) bestimmt wird.

10. Verfahren nach einem der Ansprüche 7 bis 9, **dadurch gekennzeichnet, dass** die Massebestimmung eines einmal befüllten Behältnisses (3) mehrfach wiederholt wird und die Massebestimmung durch eine Mittelwertbildung erfolgt.

11. Verfahren nach einem der Ansprüche 7 bis 10, **dadurch gekennzeichnet, dass** zu Kalibrierzwecken eine Massebestimmung an einem entleerten Behältnis (3) durchgeführt wird.

12. Verfahren nach Anspruch 11, **dadurch gekennzeichnet, dass** bei Erfassung einer Abweichung einer bekannten Leermasse eines Behältnisses (3) ein Warnsignal generiert wird.

## Claims

1. A device for the mass-related determination of the yield of cereal grains at harvesting machines, with which at least one container (3), open at its vertically upper side, of known internal volume sequentially can be moved into a vertically downward-falling stream of harvested product and moved therefrom again and the container (3) is provided with a device (4) for determining the mass, wherein the container (3) passes during its motion a stripper (5) whose vertically lower end face is arranged level with the vertically upper end face of the container (3) and
moreover a device for determining the entire volume of harvested cereal grains is present, wherein the entire harvested product reaches a band conveyor (2) and in the process a constant charging height is maintained on the band conveyor (2) by means of at least one filling level sensor (1), a stripper device (6) and a filling-level-dependent control for the drive of the band conveyor (2) takes place, so that the volume can be determined by determining the path covered by the band conveyor (2) and
the device for determining the mass (4) and the device for determining the entire volume of harvested cereal grains are connected to an electronic evaluation and control unit.

2. A device according to claim 1, **characterised in that** at least one ultrasound proximity sensor, an optical light barrier and/or an optical detector is/are present as filling level sensor (1).

3. A device according to claim 1 or 2, **characterised in that** a device for determining the driving power of the band conveyor (2) is present.

4. A device according to any one of the preceding claims, **characterised in that** at least one additional acceleration sensor and/or an inclination sensor is/are present at the harvesting machine.

5. A device according to any one of the preceding claims, **characterised in that** the container (3) has an obliquely inclined base and a flap pivotable about a horizontally oriented axis.

6. A device according to any one of the preceding claims, **characterised in that** the container (3) is movable translationally.

7. A method for the mass-related determination of the yield of cereal grains at harvesting machines, in which for determining the entire harvested product volume, the harvested product is introduced into a mountable box (7) arranged above a band conveyor (2) and the harvested product is further transported by means of the band conveyor (2), in the process a constant charging height is maintained on the band conveyor (2) by means of at least one filling level sensor (1) and a stripper device (6) and the conveying speed is controlled dependent on the filling level of harvested product in the mountable box, so that the total volume of the harvested product is determined by means of the path covered by the band conveyor; at the same time
additionally at least one container (3), open at its vertically upper side, of know internal volume sequentially is moved into a vertically downward-falling stream of harvested product and moved therefrom again, in the process
the container (3) moved out of the harvested product is weighed by means of a device (4) for determining the mass of a known partial volume and a constant filling of the container is maintained by means of a stripper (5) whose vertically lower end face is arranged level with the vertically upper end face of the container (3) as well as
the total mass of harvested product is calculated from the determined mass of partial volume of harvested product and the determined total volume of harvested product.

8. A method according to claim 7, **characterised in that** the path covered by the band conveyor (2) is ascertained by determining the rotational speed and the total volume of the harvested product is determined therefrom.

9. A method according to claim 7 or 8, **characterised in that** the driving power for the band conveyor (2) is determined.

10. A method according to any one of claims 7 to 9, **characterised in that** the determination of mass of a container (3) filled once is repeated multiple times and the determination of mass takes place by an average value formation.

11. A method according to any one of claims 7 to 10, **characterised in that** a determination of mass is carried out at an emptied container (3) for calibration purposes.

12. A method according to claim 11, **characterised in that** a warning signal is generated when a deviation of a known empty mass of a container (3) is detected.

## Revendications

1. Dispositif de détermination, en fonction de la masse, du rendement de grains de céréales sur des moissonneuses, dans lequel au moins un récipient (3), ouvert sur son côté vertical supérieur et d'un volume intérieur connu, peut être séquentiellement déplacé pour entrer puis ressortir d'un flux de produit de récolte tombant verticalement, et le récipient (3) est pourvu d'un équipement de détermination de la masse (4), dans lequel, lors de son déplacement, le récipient (3) passe par un racleur (5) dont la face frontale verticalement inférieure est agencée à hauteur de la face frontale verticale supérieure du récipient (3), et
un équipement de détermination du volume total de grains de céréales récoltés est en outre présent, dans lequel la totalité du produit de récolte parvient sur une bande transporteuse (2), et une hauteur constante de chargement est alors maintenue sur la bande transporteuse (2) au moyen d'au moins un détecteur de niveau de remplissage (1) et d'un équipement racleur (6), et une commande en fonction du niveau de remplissage s'effectue pour l'entraînement de la bande transporteuse (2), de sorte que le volume peut être déterminé en déterminant la distance déjà parcourue par la bande transporteuse (2), et
l'équipement de détermination de la masse (4) et l'équipement de détermination du volume total de grains de céréales récoltés sont raccordés à une unité électronique d'évaluation et de commande.

2. Dispositif selon la revendication 1, **caractérisé en ce qu'**au moins un détecteur de distance à ultrasons, une barrière lumineuse optique et/ou un détecteur optique est présent comme détecteur de niveau de remplissage (1).

3. Dispositif selon la revendication 1 ou 2, **caractérisé en ce qu'**un équipement pour déterminer la puissance absorbée de la bande transporteuse (2) est présent.

4. Dispositif selon l'une des revendications précédentes, **caractérisé en ce qu'**au moins un détecteur d'accélération supplémentaire et/ou un détecteur d'inclinaison est présent sur la moissonneuse.

5. Dispositif selon l'une des revendications précédentes, **caractérisé en ce que** le récipient (3) présente un fond incliné en oblique et un volet pivotant autour d'un axe orienté horizontalement.

6. Dispositif selon l'une des revendications précédentes, **caractérisé en ce que** le récipient (3) peut être déplacé en translation.

7. Procédé de détermination, en fonction de la masse, du rendement de grains de céréales sur des moissonneuses, selon lequel, afin de déterminer le volume total de produit de récolte, le produit de récolte est introduit dans une rehausse en caisson (7) agencée au-dessus d'une bande transporteuse (2) et le produit de récolte est transporté plus loin par la bande transporteuse (2), une hauteur constante de chargement étant alors maintenue sur la bande transporteuse (2) au moyen d'au moins un détecteur de niveau de remplissage (1) et d'un équipement racleur (6), et
la vitesse de transport est commandée en fonction du niveau de remplissage de produit de récolte dans la rehausse en caisson, de sorte que le volume total de produit de récolte est déterminé d'après la distance déjà parcourue par la bande transporteuse ;
de plus, au moins un récipient (3), ouvert sur son côté verticalement supérieur et d'un volume intérieur connu, est alors séquentiellement déplacé pour entrer puis ressortir d'un flux de produit de récolte tombant verticalement,
le récipient (3) ressorti du produit de récolte est alors pesé au moyen d'un équipement (4) afin de déterminer la masse d'un volume partiel connu, et un remplissage constant du récipient (3) est maintenu au moyen d'un racleur (5) dont la face frontale verticale inférieure est agencée à hauteur de la face frontale verticale supérieure du récipient (3), et la masse totale du produit de récolte récolté est calculée à partir de la masse déterminée du volume partiel de produit de récolte et du volume total déterminé de produit de récolte.

8. Procédé selon la revendication 7, **caractérisé en ce que** la distance déjà parcourue par la bande transporteuse (2) est déterminée en déterminant la vitesse de rotation, à partir de laquelle est déterminé le volume total de produit de récolte.

9. Procédé selon la revendication 7 ou 8, **caractérisé en ce qu'**on détermine la puissance absorbée pour la bande transporteuse (2).

10. Procédé selon l'une des revendications 7 à 9, **caractérisé en ce que** la détermination de la masse d'un récipient rempli (3) est répétée plusieurs fois et la détermination de la masse s'effectue par formation d'une valeur moyenne.

11. Procédé selon l'une des revendications 7 à 10, **caractérisé en ce que**, à des fins d'étalonnage, on effectue une détermination de la masse sur un récipient (3) vidé.

12. Procédé selon la revendication 11, **caractérisé en ce qu'**un signal d'alarme est généré en cas de détection d'un écart par rapport à une masse à vide connue d'un récipient (3).
